# EUROPEAN PATENT APPLICATION

(11) **EP 4 368 962 A1**
(43) Date of publication of application: **15.05.2024**
(21) Application number: 23195175.7
(22) Date of filing: 04.09.2023
(51) Int. Cl.: G01N 1/31, B01L 3/02, G01N 33/483, G01N 33/00

(54) **MACHINE AND ASSOCIATED METHOD FOR PREPARING SLIDES USING THE IFA TECHNIQUE THAT MINIMISES THE STEP OF REMOVING SLIDES FROM MOUNTING PLATES**

(30) Priority: 09.11.2022 IT 202200023115
(71) Applicant: Visia Lab S.r.l., 52027 San Giovanni Valdarno (IT)
(72) Inventor: DONATI, Gabriele, 51017 Pescia (IT); MEONI, Marco, 50058 Signa (IT); BOITA, Eduard, 52025 Montevarchi (IT)
(74) Representative: Emmi, Mario

(57) **Abstract**

The present invention relates to a slide holder (1) compatible with two interfaces, one of which is specific to the slide maker without a microscope and the other specific to the microscope in such a way that the slide holder can be quickly moved from one interface to the other by inserting the interface into the specific machine for which it is intended (slide maker or microscope).

## Description

### Scope of the Invention

The present invention relates to the technical field of slide preparation machines using the IFA technique.

In particular, the invention relates to an innovative slide preparation machine, without an analysis unit (or station, as the case may be) such as a microscope, capable of enabling a slide preparation that is simple and versatile, thus allowing slides to be transferred quickly to an analysis station.

### Brief References to the Prior Art

The indirect immunofluorescence assay (IFA) is one of the most widely used techniques in immunometry.

It is used to detect in a given sample the presence of specific antigens or antibodies the known counterpart of which is bound to a fluorophore. The fluorophore is a fluorochrome, usually fluorescein, which, upon absorbing ultraviolet rays, emits a green light that can be observed with a microscope suitably equipped for this purpose.

The method of analysis provides that, in the search for the antibody, the sample suitably diluted with a phosphate buffer or saline solution is brought into contact with known antigens (present on the substrate) and fixed in a specific area of a slide called well. The slide is therefore characterised by a set of dedicated areas on which analyses are performed.

The substrate is processed and prepared using known appropriate methods, in order to have specific antigens: if a specific disease is sought, a specific substrate is prepared that represents an antigen capable of binding with the specific antibodies that may be present in the test sample.

The operation of dispensing the sample onto the test well must be performed within a few minutes, otherwise a process of media degeneration may start and all results may be unreliable.

After placing the sample on the well and waiting for the necessary incubation time to ensure the formation of antigen/antibody bonds, a thorough washing with a buffer solution is carried out and a fluorescein-labelled anti-immunoglobulin antiserum (FITC) is added.

After waiting a further incubation time, the antiserum is washed again with a buffer solution to remove the unbound and excess portion.

At the end of this step, on each slide a mounting medium is applied for preserving fluorescence against a quick decay. Finally a coverslip that has generally a thickness of about one to two tenths of a millimetre is placed on the slide.

The mounting medium is generically a 10% glycerol solution that serves to 'crystallise' the situation obtained on the well and ensure a better retention of fluorescent light. The slide thus intensifies the durability of the biochemical complexes obtained but must be applied with care to avoid the formation of bubbles that would impair subsequent microscope vision.

The slide is now ready for microscope analysis by using magnification lens, for example 20X and 10X lens, using appropriate light sources to excite the marker so that the presence of the antibody conjugated to the fluorophore indicates the presence of the disease of interest.

In the current state of the art, the necessary procedures described above can be performed totally or partially manually, all requiring the continuous presence of an operator and a longer procedure.

The set of operations described above not only takes more time for the analysis but also risks exceeding the time limit within which the slide must be arranged, avoiding deterioration of the materials being analysed that would make subsequent measurements useless or doubtful.

It should be noted that a characteristic feature of these slides is the rapid decay of the fluorescent signal that is read under the microscope and therefore they require a rapid reading after their preparation and are not reusable after a long time for a subsequent rereading.

As mentioned above, slide preparation operations can be manual or automatic.

For example, patent publication EP3308129 to A.M.T. Srl discloses a fully automated *'walk-away'* device.

However, this type of machinery, which also incorporates a microscope, is particularly complex.

In others cases of using machines, the microscope is usually in a different station not belonging to the machine and the subsequent transfer of the slides in the microscope section is performed manually by the operator.

Considering this last type of automatic slide makers (also known as 'processors') on the market without an integrated microscope, it can be said that they, at the end of their preparation process, provide slides which, in order to be subsequently placed in the microscope, must be moved from the processing plate applied on the slide maker to a further plate that can be applied to the interface of the reading microscope.

In almost all cases, once removed from the preparation device, the slides undergo manual assembly of the coverslip by an operator (deposition of said fixing fluid on the slide and positioning of the coverslip).

The operator, therefore, operates as follows:
**1)** The operator removes the prepared slides from the processor, applies the fixing fluid and applies the coverslip manually. In doing so, there is a risk of damaging the slide or otherwise not applying the fixing medium evenly, or the risk of breaking the coverslip and that is very time consuming in any case.
**2)** Next, the operator has to place the prepared slide or slides inside a plate that is prepared to be applicable as an interface to the reading system. As mentioned, the reading system (usually a microscope) is generally a separate section from the machine.

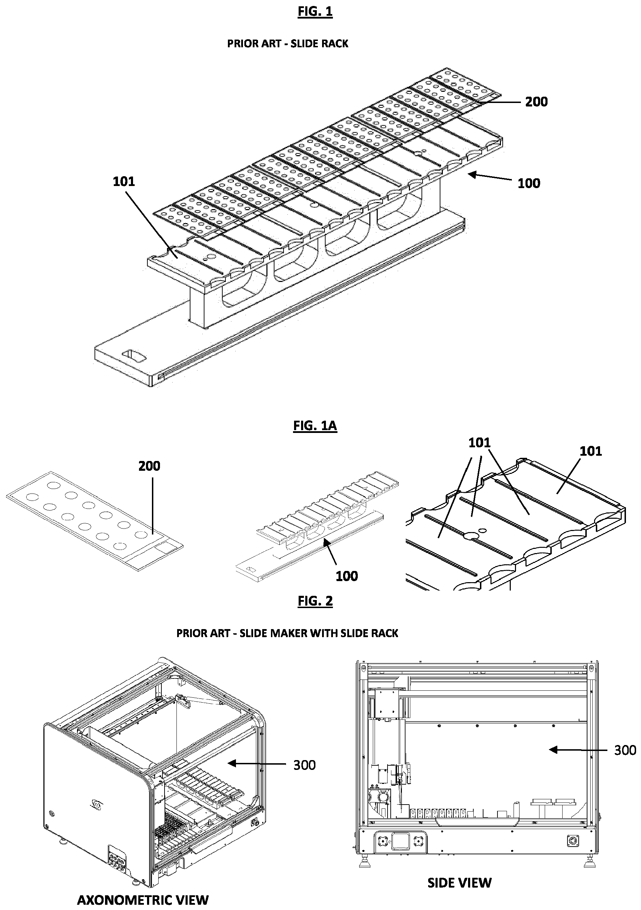

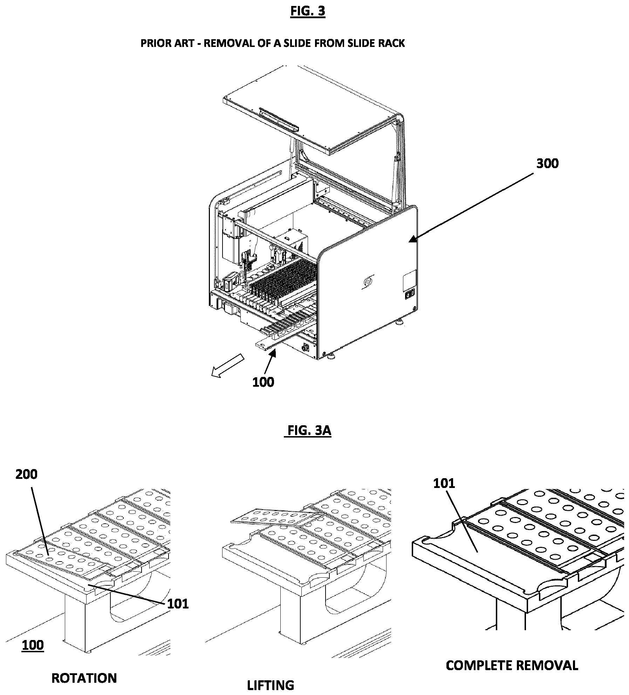

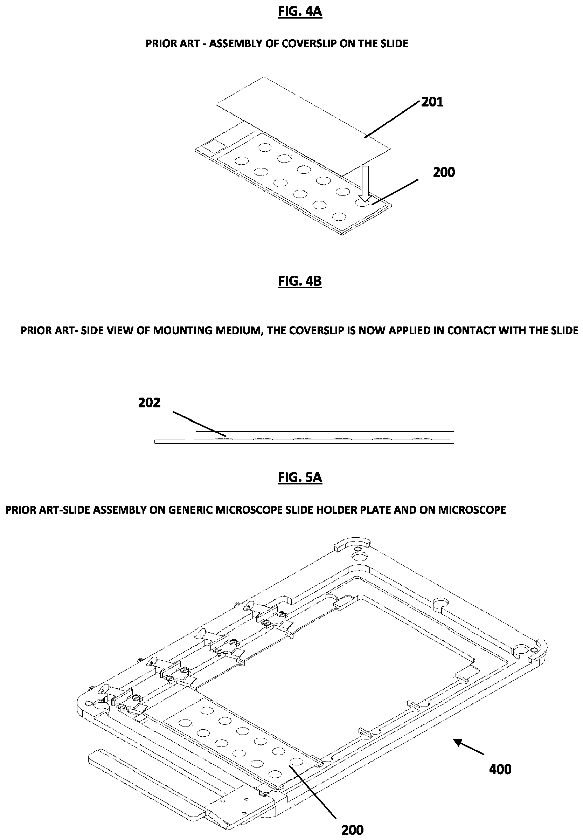

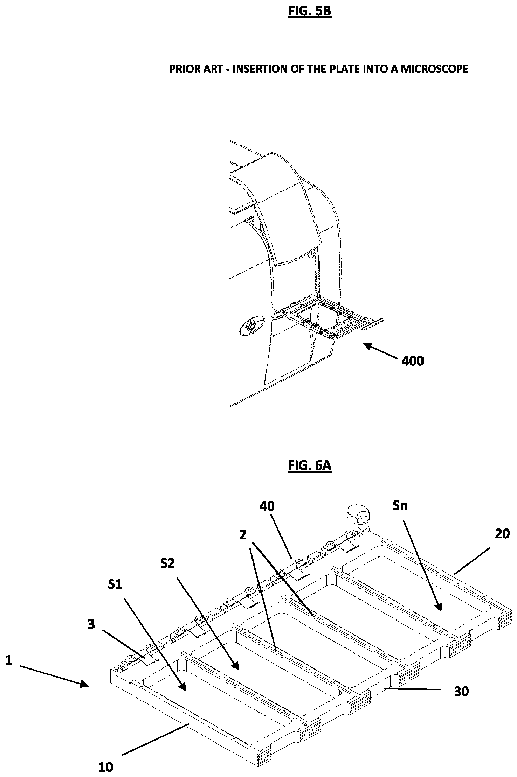

As mentioned above, therefore, the process flow described in the laboratories is normally as follows:
**1)** Application of slides on a slide 'rack' to be inserted in appropriate slide maker; figure 1 of prior art shows rack 100 and the slides 200 initially arranged each in a slot 101 of the rack 100. It should be noted that the number of slides and the possible arrangement depends on the slide maker machine. However, generally, the slides are placed side by side in varying numbers. The description, with reference to figure 1, shows a rack 100 with slots to house fifteen slides, but it could also be a rack with a different number of slides, e.g. nine slides, like the device described in publication EP3308129 (The term "Rack" is a technical term well known in the industry and indicates a holder); Slides 200, as shown in figure 1A, are equipped with wells 200'; figure 1A shows, for clarity and in a separate manner, a slide 200, the rack 100 and the slots 101 received in the support surface formed by the rack;
**2)** As shown in figure 2, processing of the slide in the machine 300 (also known as slide maker 300) without applying coverslips; this is obviously done by keeping the slides in their racks 100 inside the slots 101 (see schematic representation of figure 2 of prior art);
**3)** Removal of the slide rack by the operator from the processor 300 (see e.g. figure 3 of prior art);
**4)** Removal of slides 200 from the aforementioned rack; figure 3A of prior art shows an example of slide 200 removed from its slot 101 of rack 100 by lifting and rotation and the figure shows slot 101 empty after the removal;
**5)** Assembly and application of coverslips 201 by the operator, each one covering a slide 200, as also mentioned above (see figure 4A); in order to ensure the correct allocation of the coverslip and the presence of the mounting medium (mounting-medium 202) on a single well, the operator must apply the mounting medium 202 with a calibrated pipette according to the instructions associated with the kit being produced (see also figure 4B).
**6)** Application of each slide, now provided with its own coverslip, in a new 400 rack (see figure 5A) that can subsequently be inserted into a reader (microscope-See figure 5B). Again, the rack carrying the slides for allocation in the microscope generally has variable shapes with a number of supported slides that can be variable up to eight slides or more. The example reported above shows a slide plate for a four slide microscope.
**7)** Inserting the new rack 400 into the reader (microscope).

Ultimately, therefore, it is clear from the above that in totally or partially automated machines but still without a microscope, it is still necessary to transfer the slides from a first rack used by the machine, to a second type of rack compatible with the microscope.

This operation, obviously and as mentioned above, complicates the preparation and reading of the slide, making the overall processing time longer and putting the safety of the slide at greater risk. In fact, according to the operations described above, the risks of contamination and breakage are higher, forcing laboratory staff to perform simple and repetitive operations without added value.

Some commercially available solutions mitigate these problems by using certain slide holder structures that are compatible with both the slide maker and the microscope.

However, there are limitations in the technique of slide preparation and maintenance.

### Summary of the invention

It is therefore an object of the present invention to provide a machine and method of operation thereof that solves at least part of the aforementioned technical drawbacks.

In particular, it is an object of the present invention to provide a new type of slide holder that is directly interfaceable with both the slide maker 300 and the microscope (e.g., by means of suitable interface adjustments of the two aforementioned machines).

It is also an object of the present invention to provide a machine comprising such holder and further to provide a method for solving the aforementioned technical drawbacks.

More particularly, it is an object of the present invention to provide a type of holder, machine and method of operation that avoids the need of repeatedly moving slides from one mounting base to the next, thereby ensuring that processing time is minimised, the risk of slide damage is reduced, a high standard of repeatability in the application of the coverslip is ensured and, finally, manual operation is minimised by optimising the activities of the laboratory operator.

These and other objects are therefore achieved by the present slide holder, related machine comprising said slide holder and method of operation according to the independent claims.

The present invention relates specifically to a slide holder (1) compatible with two interfaces, one of which is specific to the slide maker without a microscope and the other specific to the microscope in such a way that the slide holder can be quickly moved from one interface to the other by inserting the interface into the specific machine for which it is intended (slide maker or microscope).

An object of the present invention is therefore a method for conducting an indirect immunofluorescence assay (IFA) comprising:
- The provision of a slide holder (1) having one or more slots (S1, S2...Sn) for positioning, in each slot, a slide (200) having a plurality of wells (202), the slide holder having, for each slot for positioning the slide, a blocking element (3), preferably elastic, which acts on the slide in order to hold it in place;
- The provision of an first interface (60) and a second interface (820) both compatible with said slide holder (1) so that both interfaces can house and support the slide holder (1);
- The provision of a slide maker (300) without a slide reading station, e.g. the reading station in the form of a microscope;
- A reading station separate from the slide maker, e.g. a microscope;
- The first interface (60) being exclusively compatible with the slide maker (300) and being insertable into said slide maker;
- The second interface (820) being compatible with the reading station in use and thus being applicable to said reading station (e.g. a microscope as mentioned);
- Preferably, the first interface (60) is compatible only and exclusively with the slide maker in use for which it is intended and thus cannot, for example, be installed in the reading station; similarly, preferably, the second interface is compatible only and exclusively with the reading station in use for which it is intended and thus cannot, for example, be installed in the slide maker;
- The method provides the following steps:
- Arranging one or more slide in the slide holder and attaching the slide holder to the first interface (60);
- Inserting the first interface (60) into the slide maker (300) and activating the slide maker, which performs the slide preparation cycle, said slide preparation cycle comprising automatic application by the slide maker of a slide cover on each prepared slide;
- At the end of the slide preparation step, removing the slide holder (s) (1) from the first interface (60) and transferring the slide holder(s) into the second interface (820) located in the reading station;
- Top-down reading of framed slides.

According to this solution, all the objectives of the invention are achieved.

The use of the interfaces in combination with the slide holder allows for rapid slide mounting and removal of the slides on the interfaces as well as quick insertion and removal of the interface from the machine for which it is intended (e.g. the slide maker or microscope).

This makes the whole process faster.

In addition, the provision of coverslips on the slides ensures the integrity of the material when removed from the slide maker (or processor as the case may be) in order to move it to the microscope.

This further allows using carry out a reading performed with established technique without risk of soiling. In particular, the reading can be done with a microscope that normally performs a top-down reading, i.e. with the lenses placed above the slide being scanned.

In addition, the coverslip (or object cover as the case may be) is applied directly by the machine itself in an automatic manner and this is a great advantage in terms of repeatability and safety. In the case of known machines, the coverslip is not applied by the machine, so it is applied by the operator manually with the risk of spilling the protective fluid. In other cases it is not placed at all, except by an operator, but only after scanning.

Advantageously, the slide preparation inside the slide maker (300) can be in accordance with the technique (IFA).

Advantageously it may include the application in each well of the slide of a product sample to ensure the formation of antigen/antibody bonds, the subsequent application of a mounting medium, for example in the form of a 10% glycerol solution and the application of the coverslip.

Advantageously, the fixing of the slide holder at the interface is by magnetic means.

A further subject of the present invention is an assembly for conducting a test using indirect immunofluorescence (IFA) comprising:
- A slide holder (1) having one or more slots (S1, S2...Sn) for positioning, in each slot, a slide (200) having a plurality of wells (202), the slide holder having, for each slot for positioning the slide, an elastic blocking element (3) which acts elastically on the slide in order to hold it in place;
- A first interface (60) and a second interface (820) both compatible with said slide holder (1) so that both interfaces can house and support one or more slide holder(s) (1);
- The first interface (60) being compatible with a slide maker (300) (preferably said first interface being compatible solely and exclusively with said slide maker for which it is intended), and said first interface being insertable into said slide maker, said slide maker having means adapted to place a coverslip on each slide in the slide holder;
- The second interface (820) being compatible with a reading station, e.g. a microscope, (preferably the second interface also being compatible only and exclusively with that reading station for which it is intended) and the second interface being applicable to said reading station in such a position that the reading station frames the slides for the top-down reading.

Advantageously the elastic locking element (3) of the slide holder can, for example, be in the form of a flexible foil.

Advantageously, the slide holder (1) can further comprise:
- Magnetic means (33) for removable attachment to the first interface (60);
- One or more handling knobs (34);
- Said slots (S1, S2...Sn) being, each one, in the form of a frame forming the support surface for the slide and having centrally a through-hole;
- And in which said support surface forms a recess (30) for each slot in such a way that the slide resting on said support surface is free for its part above said recess.

Advantageously, the first interface may comprise a containment surface (70) capable of receiving one or more slide holders in support and with said containment surface equipped with magnetic means for magnetically attaching the support surface to the containment surface (70).

Advantageously said second interface (820) may include one or more adjusting grub screws (830) in order to be correctly aligned with the table of the microscope both in height and especially in rotation.

Advantageously, the second interface (820) may comprise a chute (840) for facilitating insertion of the slide holder (1), said chute ending in a flat area (850) having two cutouts (860) for facilitating removal of the slide holder (1).

### Brief Description of the Drawings

Further features and advantages of the present slide holder, related machine comprising said slide holder and method thereof, in accordance with the invention, will become clearer from the following description of certain embodiments, made by way of example and not limitation, with reference to the accompanying drawings, wherein:
- Figures 1 to 5 show components of prior art relating to slide preparation; in particular, figure 1 shows a slide rack of prior art; figure 2 shows an axonometric view (A) and a side view (B) of a slide maker with slide rack and with slide rack removed; figure 3 shows the slide maker with the slide rack removed in an axonometric view, while figure 3A shows the steps for removing the slide from the rack; figure 4 shows the assembly of the coverslip on the slide (See A) and, further, the mounting-medium distributed with the slide applied over it (see B); Figure 5 shows the assembly of the slide on the generic microscope slide plate (see A) and then mounted on the microscope (see B);
- Figure 6 shows the holder object of the invention without slides (see A) and with slides (see B);
- Figure 7 shows a detail of the location where slides are placed with the associated springs for blocking slides and the separation path; Figure 7A shows a side view of the spring and the slide blocking;
- Figures 8 - 10 further illustrate the slide holder;
- Figure 11 and 11A show the interface...
- Figure 12 shows the machine with interface;
- Figure 13 the 2D bar code reader;
- Figure 14 and Figure 14A show in their sequence (A, B, C, D) the microscope with slide holder mounting interface;

### Description of some preferred embodiments

The present invention, as better explained in the following detailed description, it is characterised by identifying a slide holder , machine and method of operation thereof that avoids having to repeatedly move the slides from one mounting base to the next, thus ensuring that processing times are minimised, the risk of slide damage is reduced, a high standard of repeatability in the application of the coverslip is ensured and finally manual operation is minimized optimising the activities of the laboratory operator.

The machine (also called slide maker 300) to which the invention is applied is therefore without a microscope (reading station). As detailed in the invention there are two interfaces to house both of them in a single specific slide holder 1.

The first interface 60 is specific to the slide maker 300 and the other interface 820 is specific to the reading station (e.g. a microscope) but both are compatible with the same slide holder 1.

In this way, the slide holder 1 can be prepared via specific interface 60 in the slide maker 300, which slide maker 300 prepares the slides and, at the end of the operations, the operator can quickly remove the interface 60 to withdraw the specific slide holder 1, which is then applied to the specific interface 820 relating to the reading station (the microscope).

The various parts and the operational process are now described in detail below.

### SLIDE HOLDER:

The slide holder is now described below, with reference to the drawings.

As a general rule, it is anticipated that the slide holder in question should preferably be able to house at least one slide, preferably two or more slides. It is therefore advantageous when the holder allows for a high slide density, e.g. nine or fifteen slides.

Hence, an important feature is to minimise the gap between one slide and another which will be used to keep the slides apart.

The holder, which is the subject matter of the invention, must also ensure a stable assembly of the slide, for example through the application of springs that act to hold the slide steady.

The slide holder must also be permanently mountable in the reader (microscope) or inside the machine, e.g. through the use of fixing magnets.

Thus, referring now to a more detailed description of the invention, figure 6A is a schematic representation of a slide holder 1 according to the invention.

The slide holder may be generally rectangular in shape, for example.

The figure shows therefore the slide holder 1 forming side by side slots (S1, S2...Sn), each one adapted to hold a slide.

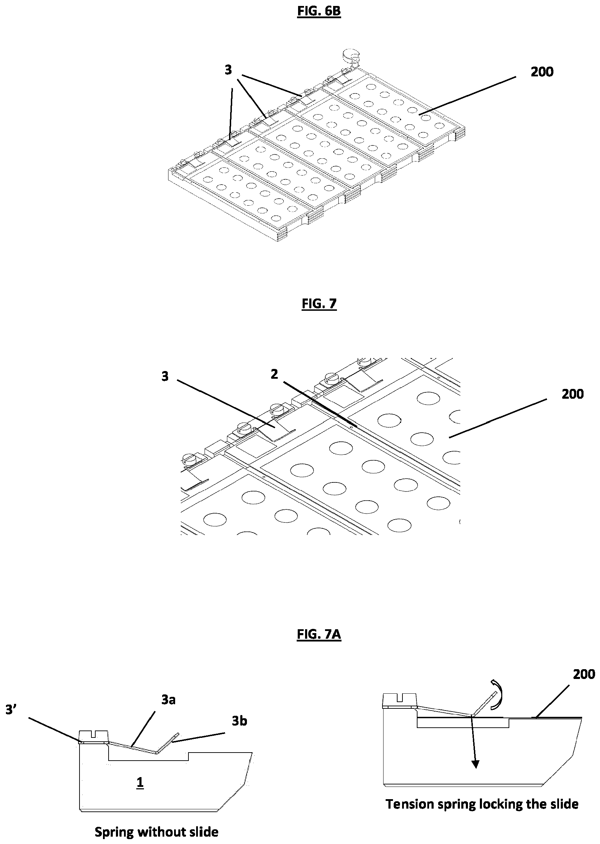

As shown in figure 6A, 6B or 7, each slot is separated from the other by a strip of material 2 (also called separation path 2).

Preferably, but not necessarily, the strip of separating material may have a width dimension between 1 mm and 1.8 mm, preferably 1.5 mm.

In this way, several slides can be placed side by side, reducing the gap and maximising the number of slides.

Obviously in the view of generating a specific interface for a given slide maker, the slide arrangement pitch can be defined in such a way as to respect the pitch preset in the slide maker itself.

Returning to figure 6A and figure 7 in detail, it can be seen that a characteristic feature of such a slide (200) holder 1 is the presence of slide blocking systems 3 arranged in such a way that they perform the slide blocking function for each slot. This makes it possible to secure the slide in the slot position where it is intended.

In the preferred configuration, these blocking systems include one or more springs 3 that serve to hold the slides firmly in place.

Such springs may for example be in the form of a flexible foil that departs from one side of the slide holder 1 and elastically flexible in order of be able to pinch one edge of the slide towards the slot where it is inserted, thus holding it in place.

Figures 6A, 6B and 7 in fact show this flexible foil solution connected to an edge of the holder 1 and that serves to pinch and hold in place the edge of the slide. One or more foils per slot can be provided.

Figure 6B is the same as figure 6, but with the slides 200 mounted in the slot, so with springs 3 locking the slides in place.

Figure 7 shows an enlarged view of such springs 3 while they pinch the upper surface of the slide in particular an edge of the slide away from the wells.

As anticipated above, the springs may for example be in the form of a flap (or foil as desired) made of an elastically flexible material, e.g. a metallic material.

In this way, when the slide is inserted into the slot, each flap is elastically deformed by bending and allowing the slide to be inserted, with the flaps located on the surface of the slide.

The position of the flaps must also be designed in such a way that a 2D bar code reader can read the bar code applied to the slide to ensure recognition of the slide type and to increase the traceability of the component. Each kit supplier applies the bar code in a slightly different position, but always on the grip area of the slide, i.e. away from the wells where the biochemical reaction takes place.

Accidental movement of the slide is therefore prevented by said flaps, in particular to avoid slippage during the scanning phase of the slide in the microscope.

As shown in figures 6 and 7, one flexible flap 3 (or foil, as the case may be) may be provided for each slot, although any number would be possible, e.g. even two flaps applied to the side edges per slot, if the slides had a bar code applied in the central position of the slide grip area.

The flap(s) 3 is (are) fixed to the slot wall in such a way that they extend towards the slot.

The preparation height is preferably related to the thickness of the slide in such a way that insertion of the slide into the slot results in elastic bending of the flaps, which then exert their elastic retaining action.

However, the springs could be in another form not necessarily in the form of a horizontal flap. For example, in a possible solution, they could be flush with the slide, so that the slide is always pressed and held in place by friction.

Figure 7A shows a side view of the single flap 3 to highlight its attachment portion 3' to the holder structure 1 and with the flap having a portion (3a) sloped towards the bottom of the slot and then an edge 3b rising (as if it were a substantially V-shape) to form an housing for the slide.

Thus, in this case, the action of such spring is pinching the slide towards the bottom of the slot as shown in figure 7A.

As an alternative to the detailed solution in figure 7A, conventional coil springs may be applied to the wall to push the slides towards the opposite wall of the slot where they are inserted.

Referring now to figure 6A, the slots (S1, S2...Sn) are each in the form of a sort of frame.

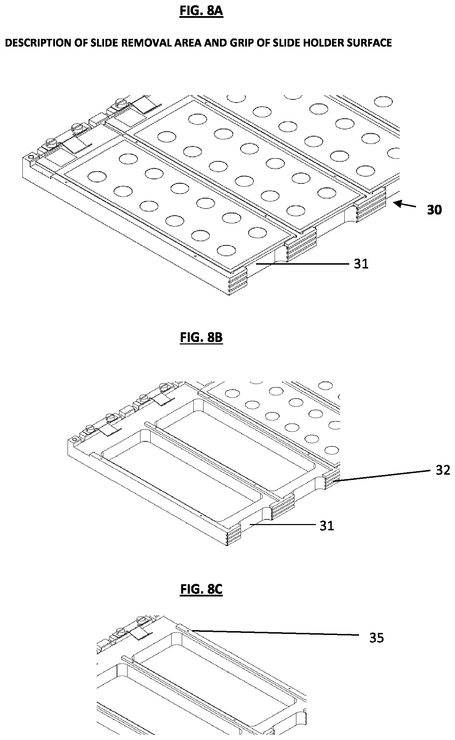

In particular, the enlargement of figure 8B shows precisely, for each slot, its rectangular shape of material forming a support frame for the slide and with a central zone having a hole passing through the entire thickness of the support. The through-hole serves for the passage of light illuminating the slide.

The frames are in fact disposed side by side with the separation path 2 mentioned above.

As can be seen from figure 6 and figures 8A and 8B, the holder has four sides to form a rectangular or quadrangular element.

The sides (10, 20, 30, 40) are preferably connected to each other at right angles.

The slides are therefore arranged in the slots with the long side parallel to the sides (10, 20) and the short side parallel to the sides (30, 40).

All slides are therefore placed side by side through their long side and separated from each other through the separation path 2.

The long side 30 of the support provides, at each slot, a sort of recess 31. In particular, the long side 30 is not constantly straight but, at each slot and therefore at a constant pitch, it provides such a recess 31.

The recess 31, preferably rectangular or semi-circular, is used to ensure that a small portion of the slide is free, i.e. it does not have the supporting surface of the slot underneath it, where the slide is resting.

This is clearly evident in figures 8A and 8B, and this solution means that the operator can easily insert one end of the phalanx of the finger under the slide to lift it easily from its slot, overcoming the force of the elastic springs.

An additional knurled area 32 can be obtained on the side 30 or on any other side for better manoeuvring the slide holder as can be seen in figure 8B.

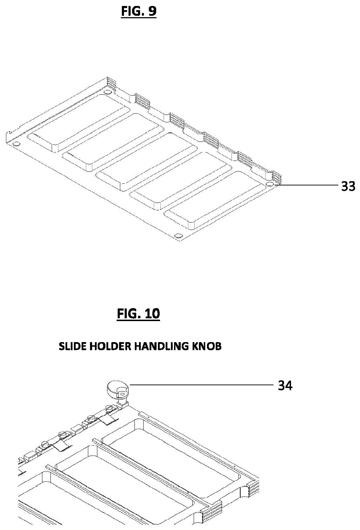

The figure 10 shows, in alternative or also in combination with the knurled area 32, a knob 34 placed here on the edge of the slide holder. Such knob could have different shapes and locations in order to fit more ergonomically to the microscope and preparation system for which it is intended.

Figure 8C shows a series of small holes 35 (for simplicity's sake, the figure shows only one of them), preferably 0.5mm in diameter and a few tenths of a millimetre deep.

These holes are preferably drilled after anodic treatment of the substrate and drilled inside the partition member 2.

These holes have a function for verifying the correct movement performed by the motorised table control system in the microscope: since their distance is physically known and is a constant, verification with the microscope of this distance can make sure that the motors and possibly the encoders of the microscope table are operating correctly.

In fact, they of references.

Figure 9 shows the slide holder 1 upside down to highlight possible magnets 33 present in order to be able to magnetically attach it, quickly, both to a slide preparation machine support and to the reducer applied to the microscope.

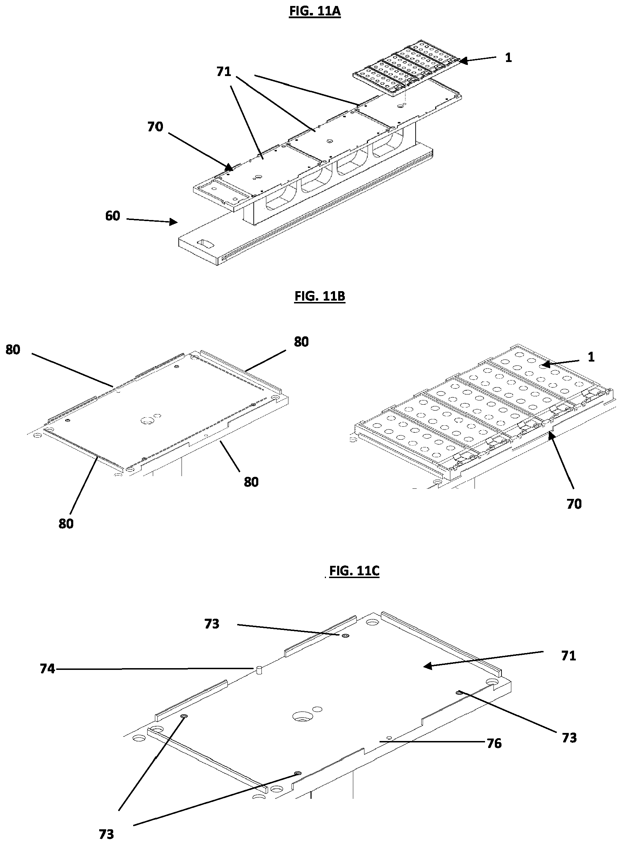

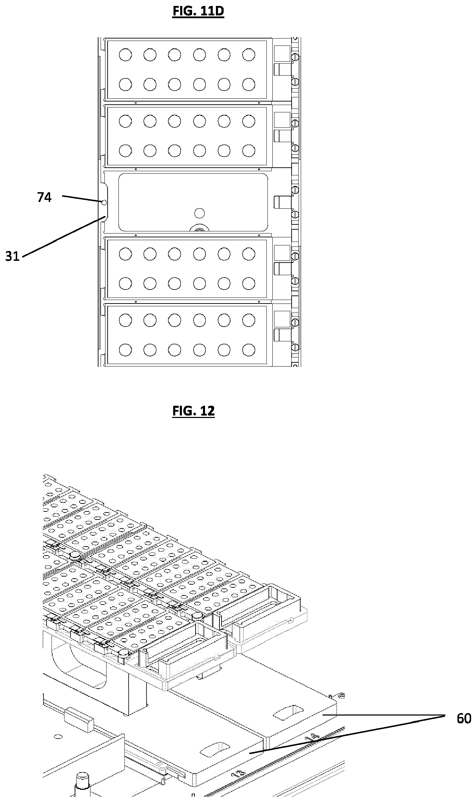

The slide holder described above is coupled to its own interface 60 (also called first interface) also shown in figure 11.

Interface 60 is presented as a specific solution for a given slide maker 300 (as described below), however, it can be easily adapted to any type of slide maker 300 once the reference geometry on which the slides are normally placed is known.

In this way, the operator has only to arrange the media described above with the slides on the interface and arrange the interface in the machine for slide preparation.

Following slide preparation, it can all be integrally moved under a microscope reading station.

Interface 60 is structurally detailed below.

With reference to figure 11A, an important element of this interface is the containment surface of the slide holder(s) indicated with the reference number 70.

Figure 11A shows that this element can be preferably composed of three insertion zones 71 as a support surface for slide holders 1. The picture describes a solution that can be applied to the L20-07 'liquid handling' device from Visia Lab, for example; however, in a similar way as represented, one could devise interfaces 60 with containment surfaces 70 having any number of insertion zones 71, obviously depending also on the number of slides supported by slide holder 1, thus from one to more than one insertion zones.

A fairly typical solution could be, for example, a slide holder 1, with a number of three mountable slides, and an interface 60 with a containment surface 70 arranged to have four insertion zones 71.

Analysing in detail the surface 70 alone with the insertion zones 71, it can be seen that these zones are characterised by preferably having four perpendicular sides 80 so as to be able to contain the slide holder 1 therein with a minimum assembly clearance.

In particular, figure 11B on the left shows an insertion zone relating to a surface 70 and without the slide holder 1, while figure 11B on the right shows the insertion zone 71 that houses the slide holder 1.

The area 71 provides the use of an anti-error system for mounting the slide holder 1; said system may for example be a pin 74 (see figure 11C) positioned in an area that does not interfere with said slide holder 1 in a mounting condition if the slide holder 1 is mounted in one direction, for example by having the pin positioned at the recess 31 of figure 8B.

Reverse assembly would not be possible because of the pin. In particular, if mistakenly rotated by 180°, the slide holder does not fit into place as the anti-error pin cannot find a space where it can be housed (see also figure 11D).

Area 71 further includes systems for adjusting the inclination of the slide holder so as to avoid planar plane alignment errors due to manufacturing errors.

During the preparation of slides, the correct alignment of the slides is very important to avoid impact between the preparation needles and the slide in order to avoid damage to the slide.

In this particular area, the application of four precision grub screws 73 is described. In particular, by varying their height, it is possible to change the rotations and height of the nominal mean plane of the slide holder 1.

Area 71 is also characterised by the presence of magnets for positioning the slide holder 1 in a safe and stable manner. These magnets are arranged in the surface 71 in such a way that they face the magnets already present on the same slide holder 1 previously referenced as 33 (see figure 9), when the slide holder 1 is correctly applied on the surface 71.

Finally, the area 71 has a series of cutouts 76 at the four edges of the lattice 80 and also at the central area to ensure an easier gripping and removal of the slide holder 1 from the interface 60.

The interface 60 with the slide holder described can be developed to be suitable for any machine.

However, it may apply in particular to the 'Liquid Handling' model machine from Visia Lab, with particular reference to machines with project names L20-07 and L21-01, L21-02 or belonging to the same family of machines. Preferably, the system herein described applies indeed to said type of processors produced by Visia Lab with registered office in Via Martiri della Libertà in San Giovanni Valdarno in Tuscany (IT), as also reported in the following internet link:
https://www.visialab.com/it/contacts.php

This 'Liquid Handling' machine performs the complete preparation of the slide and, in addition, can perform the assembly and application of the coverslip.

As mentioned, however, any machine could be suitable for receiving interface 60 and being equipped for slide preparation, including placing the coverslip.

With particular reference to machines of the Visia Lab 'Liquid Handling' type, a vacuum pump interfaced with a vacuum gauge and suction cup is used to perform this operation.

The coverslips are placed inside a plastic container with a maximum number from twenty coverslip per container.

The suction cup is carried by the slide maker's robot on the coverslip and is sent to suction it. When the vacuum gauge switches from reading a negative pressure to reading a positive pressure, the robot terminates the descent of the suction cup and begins the rise with appropriate movements that allow the complete detachment of the coverslip from the rest. It is then deposited with decimal precision onto the slide onto which the mounting fluid was previously applied by the machine's hydraulic dispensing system.

The system just described could also be automated on machines that do not perform complete slide preparation with the application of the coverslip, simply by creating an external robotic station, where, once the interface 60 is removed from the slide maker, it is inserted into a robotic station for the application of the *mounting medium* and coverslip, similar to that described in the Visia Lab devices, and thus comprising at least one system for the application of the *mounting medium* by means of a precision pump and a system for the removal and application of the coverslip by means of a suction cup and vacuum pump appropriately controlled and handled by a robotic system.

A well-known system of applying the coverslip used in the above-mentioned Visia Lab machines is, for example, also described in more detail in European application EP3308129 to A.M.T. Srl and incorporated herein in its entirety by reference.

Figure 12 thus shows two interfaces 60 with their respective support arranged inside a machine, e.g. Visia Lab's 'Liquid Handling' machine for preparing slides. Notice the slides arranged in their slots.

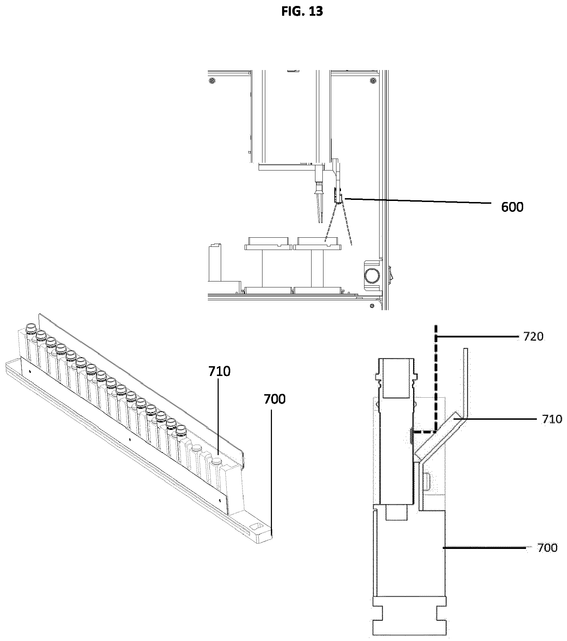

Said 'Liquid Handling' model machine from Visia Lab also features a 2D bar code reading system 600 described in Figure 13. This reading system is applied on the robotic head in a vertical position in so as to read the bar code readers on the slides.

In order to avoid introducing another 2D bar code reader for reading bar codes contained, for example, in the control flasks, the rack 700 was equipped with a glass 710 placed at 45° so that the 2D bar code on the flask could be read by the bar code reader 600 placed on the robotic head, given the optical transmission line 720 of the 2D bar code image coaxial with it.

At this point, once the slides have been prepared, the slide holder sub-assembly 1 can be removed from interface 60 from the slide maker and placed directly into a mounted reader with a suitable interface for inserting the slide holder.

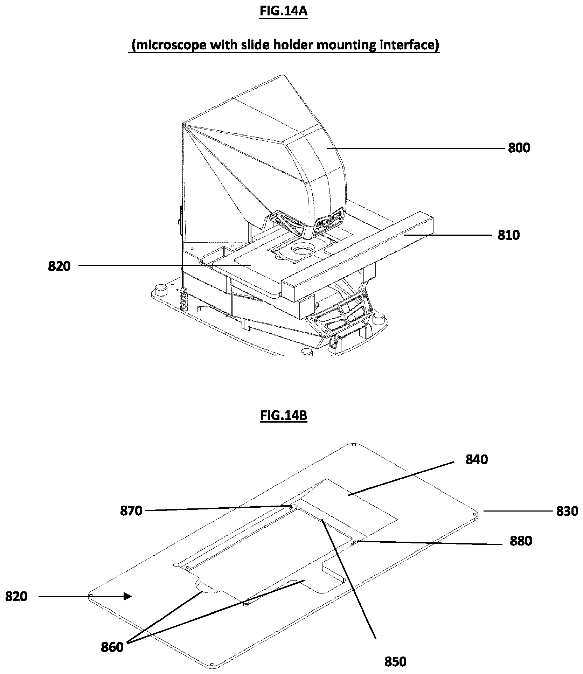

Figure 14A shows a microscope 800, on which is located a motorised table 810. This table must be provided with a second interface 820 that is adapted to receive the slide holder 1.

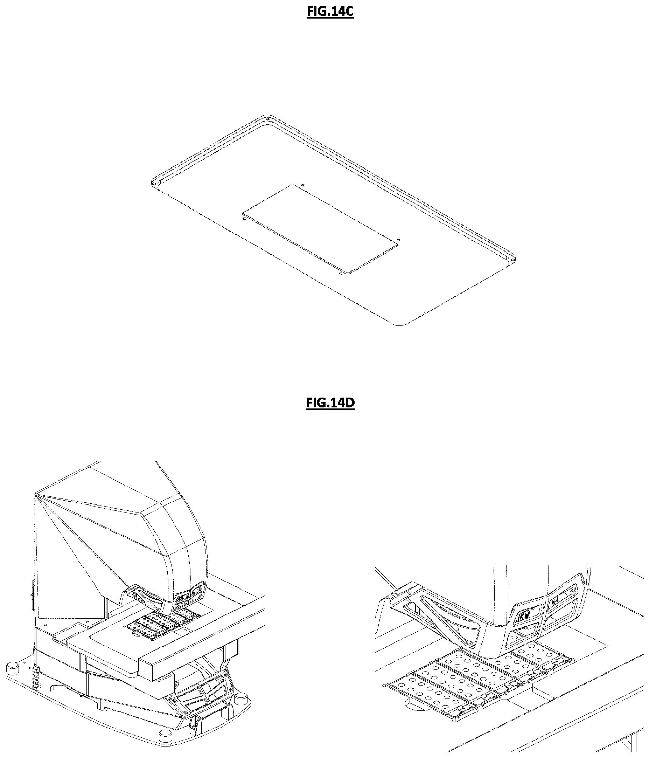

The detail of the interface is shown more clearly in the following figures 14B and 14C.

The interface 820 must fit the table, so generally the geometry will be defined by the component on which it is to be applied.

The interface normally has some adjustment grub screws 830 in order to be correctly aligned with the microscope table both in height and especially in rotation. There are four grub screws that are normally micrometric and preferably at the four corners.

In this specific case, the interface provides a chute 840 to facilitate the insertion of the slide holder 1; this chute terminates in a plane area 850 having two cutouts 860 (side and frontal) to facilitate removal of the slide holder 1 once the reading is completed.

Four magnets 880 are provided at the slide holder magnets to keep the support in place, and possibly some additional adjusting grub screws 870.

Figure 14C shows a view of the lower part to highlight the integration zone with the motorised table.

Figure 14D finally shows the assembly of slide holder 1 on the microscope.

According to the invention, slides are now arranged on a slide holder 1 which, through interfaces, can be applied to the processor and then to the microscope.

All the operator has to do is place the slide holder 1 (one or more than one) in the specific interface 60 located inside the processor.

After the preparation is complete, the interface is extracted and the slide holders 1 are placed on the microscope table via the interface 820 as shown in Figure 14D.

In this way, the same slide holder containing several slides can be easily inserted into the slide maker and removed from it to be placed directly onto the microscope.

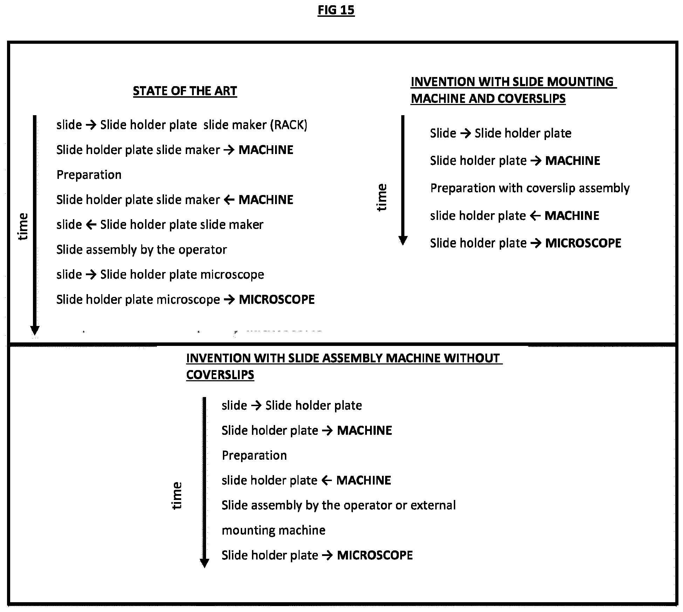

For this purpose, figure 15 shows the workflow in the various possible options.

It is evident that from the state of the art to the application of the solution with a slide holder directly applicable on the slide maker and microscope, the reduction in working time is quite significant.

In the lower part of the flow in the figure is also shown the option with the machine that does not perform directly the coverslip assembly.

In this case, it is possible to operate either with a manual operator or with an external device that, regarding the coverslip assembly, is similar to the Visia lab systems.

The slide for indirect immunometric assays with fluorescent marker (immunofluorescent assay IFA) provides, in a non-fungible manner, the use of slides as the final step of the immunometric reaction, in order to preserve the substrate quality and therefore the quality of the results obtained.

Thus, in a preferred configuration of the invention, the machine and related method object of the invention provides the use of slides complete with mounting fluid and coverslips, in order to achieve the best quality results and respect of the most part of the instructions for use of commercially available IFA methods. The operational method provides also the top-down microscopic reading and, being a fluorescent method, with a reflected light system. The top-down reading with a preparation complete with coverslip has the advantage that there are no foreign bodies (e.g. dust or liquids) in the optical path, and a better plane of focus, as the mounting liquid and the coverslip itself (in this text "cover glass" is synonymous with "coverslip") have a levelling and compacting action on the substrate being read in the IFA test.

Some known systems perform a bottom-up reading with substrate without coverslip. Reading in reflected light allows this technical solution, but has risks in image reading due to the fact that the bottom of the IFA slides may have foreign bodies such as dirt, liquid residues, which are an obstacle to reading.

Through the method described in accordance with the invention, using fully assembled slides, there is no risk of contamination for the operator, or of damage to the IFA substrate, given the presence of mounting fluid and coverslip, in perfect compliance with all commercially available instructions for use.

In summary, the method according to the preferred configuration of the invention differs from methods also known for the use of fully assembled IFA slides equipped with a coverslip and mounting fluid, in perfect compliance with the commercially available IFA kits instructions for use.

The preferred solution described herein allows for the safe removal of the slides in the tray, as opposed to solutions involving slides with free liquids on the surface, and the risk of contamination and spread of the same during slide removal.

Thus, according to the preferred configuration of the invention, a top-down reading, as opposed to bottom-up reading of the slide through the slide tray, is advantageous.

In fact, the bottom-up reading has the limitations of a fluorescent reading that must pass through the thickness of the entire slide substrate, being subject to the limitations of soil on the bottom of the slide, and imperfections in the slide itself.

## Claims

1. A method for conducting an indirect immunofluorescence assay (IFA) comprising:
- Providing a slide holder (1) having one or more slots (S1, S2...Sn) for positioning, in each slot, a slide (200) having a plurality of wells (202), the slide holder having, for each slot for positioning the slide, a blocking element (3), preferably elastic, which acts on the slide in order to hold it into the slot;
- Providing a first interface (60) and a second interface (820) both compatible with said slide holder (1) so that both interfaces can house and support one or more slide holders (1);
- Providing a slide maker (300) without a slide reading station, for example a microscope;
- A reading station separate from the slide maker, for example a microscope;
- The first interface (60) being exclusively compatible with the slide maker (300) and being insertable into said slide maker;
- The second interface (820) being exclusively compatible with the reading station and applicable to said reading station;
- The method providing the following steps:
- Arranging one or more slides in the slide holder(s) and attaching the slide holder to the first interface (60);
- Inserting the first interface (60) into the slide maker (300) and activating the slide maker which performs the slide preparation cycle, said slide preparation cycle comprising automatic application (300) of a coverslip on each prepared slide by the slide maker;
- At the end of the slide preparation step, removing the slide holder(s) (1) from the first interface (60) and transferring the slide holder(s) in the second interface (820) located in the reading station;
- Top-down reading of framed slides.

2. The method according to claim 1, wherein the slide preparation within the slide maker (300) is in accordance with the technique (IFA).

3. The method according to claim 2, wherein said method comprising applying a sample product in each well of the slide to ensure the formation of antigen/antibody bonds, subsequently applying a mounting medium in the form of a 10% glycerol solution and applying a coverslip.

4. The method, according to one or more of the preceding claims, wherein the attachment of the slide holder to the interface is by magnetic means.

5. The method, according to one or more of the preceding claims, wherein the slide maker is a 'liquid Handling' type slide maker produced by Visia Lab.

6. An assembly for conducting an indirect immunofluorescence assay (IFA) comprising:
- A slide holder (1) having one or more slots (S1, S2...Sn) for positioning, in each slot, a slide (200) having a plurality of wells (202), the slide holder having, for each slot for positioning the slide, a blocking element (3), preferably elastic, which acts on the slide in order to hold it into the slot;
- A first interface (60) and a second interface (820) both compatible with said slide holder (1) so that both interfaces can house and support one or more slide holder(s) (1);
- The first interface (60) being compatible exclusively with a slide maker (300) and said first interface being insertable into said slide maker, said slide maker having means adapted to place a coverslip on each slide arranged in the slide holder;
- The second interface (820) being exclusively compatible with a reading station, for example a microscope, and the second interface being applicable to said reading station in such a position that the reading station frames the slides for the top-down reading.

7. The assembly according to claim 6, wherein the blocking element (3) of the slide holder is of an elastic type, for example in the form of a flexible foil.

8. The assembly, according to claim 6 or 7, wherein the slide holder (1) further comprises:
- Magnetic means (33) for removable attachment to the first interface (60) and/or the second interface (820) ;
- One or more handling knobs (34);
- Said slots (S1, S2...Sn) being, each one, in the form of a frame forming the support surface for the slide and having centrally a through-hole;
- And wherein said support surface forms a recess (30) for each slot so that the slide resting on said support surface is free for its part above said recess.

9. The assembly, according to one or more of the preceding claims, wherein the first interface comprises a containment surface (70) suitable for receiving in support one or more slide holders and wherein said containment surface is provided with magnetic means for magnetically attaching the support surface to the containment surface (70).

10. The assembly, according to one or more of the preceding claims, wherein said second interface (820) comprises one or more adjustment grub screws (830) in order to be correctly aligned with the table of the reading station, for example the microscope, both in height and rotation.

11. The assembly according to one or more of the preceding claims, wherein the second interface (820) comprises a chute (840) for facilitating insertion of the slide holder (1), said chute ending in a flat area (850) having two cutouts (860) for facilitating removal of the slide holder (1).
